# EUROPÄISCHE PATENTSCHRIFT

(11) **EP 1 533 140 B1**
(45) Veröffentlichungstag und Bekanntmachung des Hinweises auf die Patenterteilung: **26.07.2006**
(21) Anmeldenummer: 03026718.1
(22) Anmeldetag: 21.11.2003
(51) Int. Cl.: B60C 11/12, B60C 11/11

(54) **Laufflächenprofil für einen Fahrzeugluftreifen**
Tread pattern for a vehicle tyre
Profil de la bande de roulement d'un pneumatique pour véhicules

(43) Veröffentlichungstag der Anmeldung: 25.05.2005
(73) Patentinhaber: Continental Aktiengesellschaft, 30165 Hannover (DE)
(72) Erfinder: Dörrie, Helge, 30173 Hannover (DE); Diensthuber, Franz, 30167 Hannover (DE)

(56) Entgegenhaltungen:
- EP-A- 0 609 194
- EP-A- 0 713 790
- EP-A- 0 779 164
- EP-A- 0 968 847
- DE-A- 19 827 244

## Beschreibung

Die Erfindung betrifft einen Fahrzeugluftreifen, insbesondere für den Einsatz unter winterlichen Fahrbedingungen, mit einem Laufstreifen, welcher durch Nuten, Rillen und dergleichen gebildete Profilpositive aufweist, wobei Profilpositive vorgesehen sind, welche mit einem Netz aus Einschnitten versehen bzw. überzogen sind, welches sich, gegebenenfalls einschließlich etwaiger Profilpositivkanten, aus n-Ecken mit n ≥ 3 zusammensetzt, wobei innerhalb der Profilpositive zumindest eine Kette aus zumindest zwei n-Ecken, insbesondere aus Sechsecken, gebildet ist, welche paarweise zueinander zumindest im Wesentlichen parallel verlaufende Einschnitte aufweisen und wobei jeweils ein Einschnitt zu zwei aneinandergereihten n-Ecken gehört.

Derartige Fahrzeugluftreifen gibt es in unterschiedlichen Ausführungen, insbesondere als Winterreifen. Bei dem aus der EP 0 609 194 A1 bekannten Fahrzeugluftreifen sind im Laufstreifenprofil Profilblöcke vorgesehen, die mit zick-zack- oder wellenförmigen Einschnitten und diese entlüftenden Entlüftungsnuten versehen sind, derart, dass Entlüftungsnuten und Einschnitte ein die Profilblöcke überziehendes Netz aus Vierecken bilden. Auch bei dem aus der DE 198 27 244 A bekannten Fahrzeugluftreifen sind die Profilpositive jeweils mit einem Einschnittnetz aus Vierecken überzogen.

Aus der gattungsgemäßen EP 0 691 222 B ist ein Winterreifen bekannt, dessen Laufstreifen Profilpositive aufweist, die mit einem Netz aus n-Ecken überzogen sind oder ein derartiges Netz aufweisen. Bei einer bevorzugten Ausführung setzt sich ein Großteil dieses Netzes aus untereinander gleich dimensionierten regelmäßigen Sechsecken zusammen. Auch aus der EP 0 968 847 A ist ein Winterreifen bekannt, dessen Blöcke von einem Einschnittnetz komplett überzogen sind, welches zumindest eine Kette aus Sechsecken aufweist. Von den im Blockinnenbereich verlaufenden Sechsecken verlaufen zu sämtlichen von Nuten begrenzten Randbereichen Einschnitte, die gemeinsam mit den Nuten Randelemente bilden, die eine durchschnittliche Fläche aufweisen, die größer ist als die durchschnittliche Fläche der im Innenbereich des jeweiligen Blockes angeordneten Sechsecke. Reifen mit derartigen Laufsstreifen haben sich auch in der Praxis bereits gut bewährt. Durch die Regelmäßigkeit der Anordnung der Sechsecke ergeben sich Profilblöcke mit einer gleichmäßigen Biegesteifigkeit. Es hat sich nun herausgestellt, dass bei derartigen Laufstreifen die Blocksteifigkeit insgesamt und die Biegesteifigkeit in Querrichtung höher sein könnten, um das Fahrverhalten noch mehr zu verbessern. Des weiteren hat sich herausgestellt, dass die Verwendung derartiger Einschnittsstrukturen bei Profilen für Reifen von schwereren Fahrzeugen nur eingeschränkt möglich ist.

Der Erfindung liegt die Aufgabe zu Grunde, einen Reifen der eingangs genannten Art diesbezüglich zu verbessern.

Gelöst wird die gestellte Aufgabe erfindungsgemäß dadurch, dass die Länge von parallel zueinander und zumindest im Wesentlichen quer zur Erstreckung der Kette verlaufenden Einschnitten in der in oder im Wesentlichen in Umfangsrichtung verlaufenden Kette schrittweise erhöht ist.

Durch die Variation der Länge bestimmter Einschnitte können die n-Ecken in eine bestimmte Richtung quasi gestreckt werden, wodurch die Biegesteifigkeit der Profilblöcke in diese Richtung erhöht wird. Dadurch kann beispielsweise das Bremsverhalten des Reifens auf trockener Straße, ohne auf die für eine gute Quertraktion auf schneebedeckten Fahrbahnen erforderlichen Griffkanten verzichten zu müssen, deutlich verbessert werden. Somit können gemäß der Erfindung die Vorteile des Einschnittnetzes zur Gänze erhalten bleiben.

Dabei wird die Länge der Einschnitte in zumindest zwei Schritten erhöht. Je nach dem, welche Orientierung die Ketten aus n-Ecken im Laufstreifen aufweisen und ob die Ketten eher im Laufstreifenmittelbereich oder im Randbereich des Laufstreifens vorgesehen sind, wird entweder die Länge von Paaren von Einschnitten in den n-Ecken der Kette oder die Länge aufeinander folgender Einschnitte in den n-Ecken der Kette schrittweise erhöht.

Die Ketten aus n-Ecken bestehen bevorzugt aus Sechsecken, insbesondere in Schulterblöcken, oder aus einer Kombination aus Sechs- und Siebenecken, insbesondere in Profilpositiven im Laufstreifenmittelbereich.

In Schulterblöcken ist dabei die Länge der Einschnitte umso größer, je näher sie beim Laufstreifenrand liegen. Damit wird dem Umstand Rechnung getragen, dass Profilpositive in der Nähe von Umfangsnuten etwas steifer sein sollen. Bevorzugt in Schulterblöcken sind die Einschnitte, deren Länge schrittweise erhöht wird, solche, die im Wesentlichen in Richtung der Erstreckung der Kette aus n-Ecken verlaufen. Diese Maßnahme erlaubt die gezielte Änderung der Blocksteifigkeit in der Erstreckungsrichtung der Kette aus n-Ecken.

In Blöcken im mittleren Bereich des Laufstreifens ist es dabei bevorzugt, wenn die Längenänderung der Einschnitte in einer Kette von n-Ecken erfolgt, welche in oder im Wesentlichen in Umfangsrichtung verläuft.

Besonders in Blöcken oder Profilpositiven im mittleren Bereich des Laufstreifens sind dabei die Einschnitte, deren Länge schrittweise erhöht ist, solche, die im Wesentlichen quer zur Erstreckung der Kette aus n-Ecken verlaufen. Damit lässt sich im mittleren Bereich des Laufstreifens die hier erwünschte Beeinflussung der Biegesteifigkeit der Profilpositive unter Erhalt optimaler Griffeigenschaften durchführen.

Die Längenänderung von Einschnitt zu Einschnitt oder von Einschnittpaar zu Einschnittpaar kann in einem breiten Bereich, insbesondere zwischen 10% und 50%, erfolgen.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Draufsicht auf eine Teilabwicklung einer Ausführungsform eines Laufstreifens eines Fahrzeugluftreifens,
Fig. 2 eine Draufsicht auf eine Teilabwicklung einer anderen Variante eines Laufstreifens,
Fig. 3, Fig. 4 und Fig. 5 Draufsichten auf Profilblöcke des in Fig. 1 gezeigten Laufstreifens sowie
Fig. 3a, Fig. 4a und Fig. 5a Details von Einschnitten aus diesen Blöcken,
Fig. 6 und Fig. 7 Draufsichten auf Profilblöcke des in Fig. 2 gezeigten Laufstreifens und
Fig. 6a und Fig. 7a Details von Einschnitten aus diesen Blöcken.

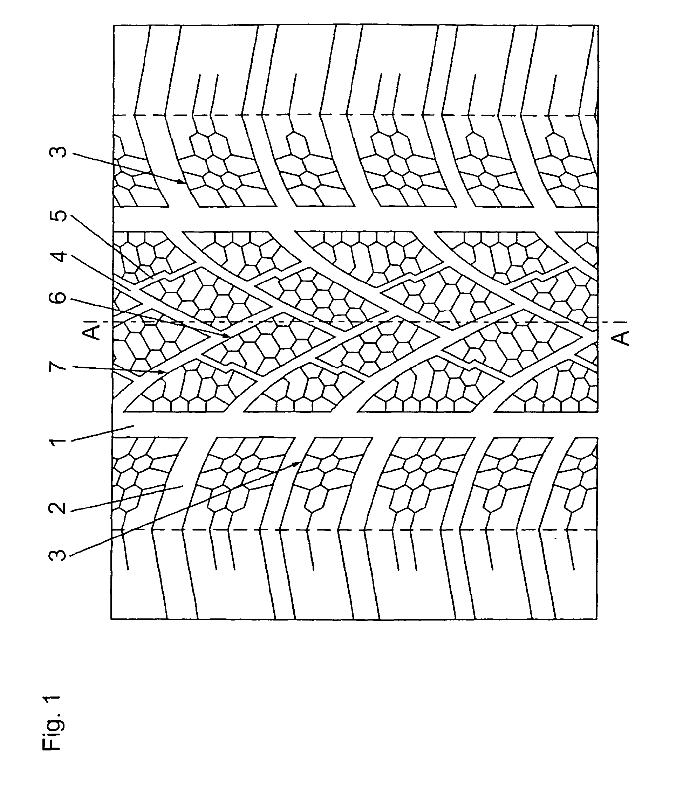

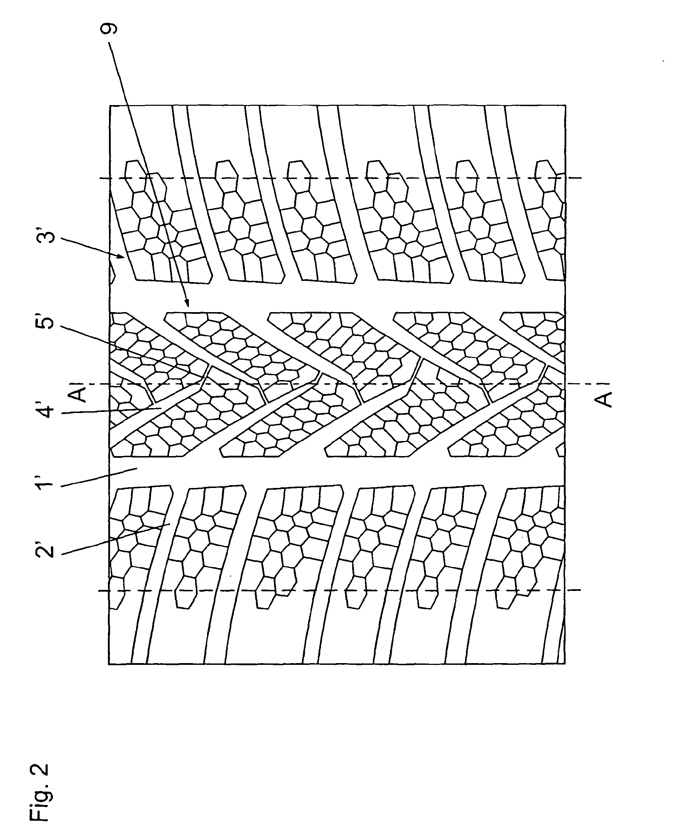

In den Zeichnungsfiguren und der Beschreibung werden die Laufstreifen und die Profilblöcke nur in jenem Bereich betrachtet, welcher beim Abrollen des Reifens unter normalen Bedingungen (Normdruck und Normlast) mit dem Untergrund in Kontakt kommt. In Fig. 1 und Fig. 2 ist diesbezüglich die Aufstandsbreite B des Reifens eingezeichnet.

Der in Fig. 1 gezeigte Laufstreifen weist zwei symmetrisch zur Äquatorlinie des Reifens, welche durch die Linie A-A versinnbildlicht ist, verlaufende breite Umfangsnuten 1 auf. Von den Umfangsnuten 1 zweigen in Richtung zu den Laufstreifenrändern verlaufende Quernuten 2 ab, die ebenfalls relativ breit ausgeführt sind und Schulterblöcke 3 bilden. Zwischen den beiden Umfangsnuten 1 verbleibt ein etwa 40% bis 50% der Aufstandsbreite B einnehmender Umfangsbereich, in welchem durch Diagonalrillen 4 und Verbindungsrillen 5 eine weitere Gliederung des Laufstreifens in Profilblöcke 6, 7 erfolgt. Die von der einen Umfangsnut 1 ausgehenden Diagonalrillen 4 sind gegenüber jenen, die von der zweiten Umfangsnut 1 ausgehen, in Umfangsrichtung versetzt. Die Diagonalrillen 4 verlaufen in Richtung der Äquatorlinie A-A pfeilartig aufeinander zu, wobei jeweils eine von der einen und eine von der anderen Umfangsnut 1 kommende Diagonalrille 4 aufeinander stoßen. Dadurch wird entlang der Äquatorlinie A-A eine zick-zack-förmige und näher nicht bezeichnete Nut gebildet. Die Diagonalrillen 4 sind unter einem spitzen Winkel in der Größenordnung von etwa 20° bis 30° zur Umfangsrichtung orientiert. Die gegensinnig zu den Diagonalrillen 4 verlaufenden Verbindungsrillen 5 verlaufen ebenfalls unter einem spitzen Winkel von 20° bis 30° zur Umfangrichtung und verbinden jeweils zwei benachbarte und von der einen Umfangsnut 1 ausgehende Diagonalrillen 4. Durch die Verbindungsrillen 5 erfolgt eine Gliederung der Profilpositive zwischen einander benachbarten Diagonalrillen 4 in jeweils zwei Blöcke, den zentralen Block 6 und den der jeweiligen Umfangsnut 1 benachbarten mittleren Block 7. Bei der dargestellten Ausführungsform sind die Verbindungsrillen 5 mit zwei Knickstellen ausgeführt, sodass sie nicht geradlinig verlaufen.

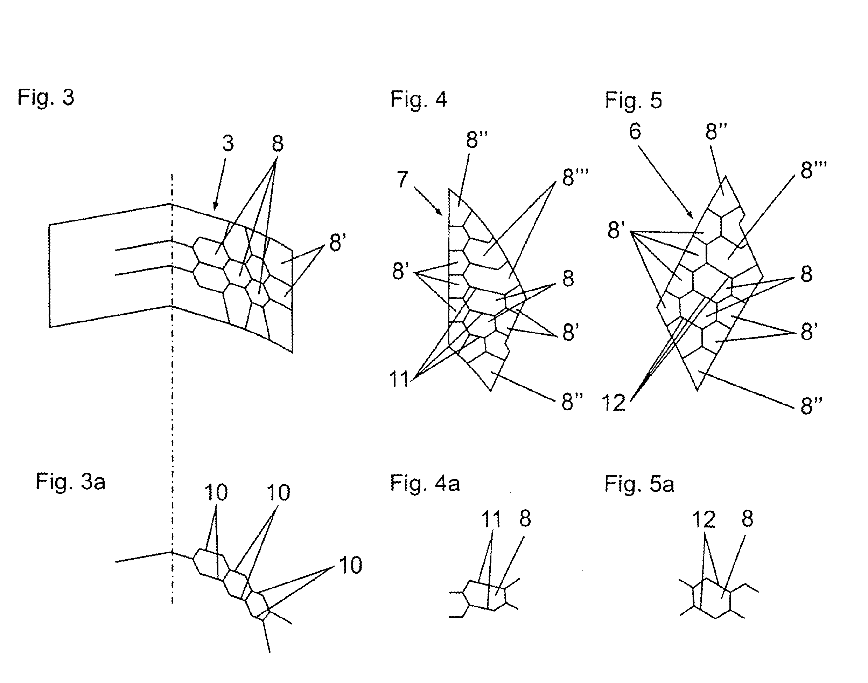

Die Blöcke 3, 6 und 7 sind jeweils mit einem Netz von Einschnitten überzogen, welche eine Breite zwischen 0,3 bis 1 mm, insbesondere 0,4 bis 0,6 mm, aufweisen und eine Tiefe zwischen 1 mm (bei neuem Reifen) und Dessintiefe, welche üblicher Weise zwischen 7 und 9 mm beträgt, aufweisen. Wie insbesondere Fig. 3 bis 5 und Fig. 3a bis 5a zeigen, ist eines der Grundelemente des Einschnittnetzes ein Sechseck 8. Die Sechsecke 8 können im Wesentlichen regelmäßige oder, wie noch beschrieben wird, unregelmäßige Sechsecke sein. Weitere Elemente des Einschnittnetzes sind Fünfecke 8', welche bei der dargestellten Ausführungsform vorrangig entlang der Profilblockkanten vorliegen, ferner Vierecke 8", welche ebenfalls an Profilblockkanten oder im Bereich von Ecken der Profilblöcke gebildet sind sowie vereinzelt auch Siebenecke 8"', die bei der dargestellten Ausführung ebenfalls Teile der Profilblockkanten einschließen und insbesondere dort gebildet sind, wo eine Unterteilung in Fünf- oder Sechsecke durch einen weiteren Einschnitt aus Gründen der Profilblockstabilität unterblieben ist.

In dem in Fig. 3 gezeigten Schulterblock 3 besteht das Einschnittnetz im mittleren Bereich des Blockes 3 aus fünf Sechsecken 8 und randseitig - zu den Quernuten 2 und den Umfangsnuten 1 - aus Fünfecken 8' und Vierecken 8". Drei der aneinander anschließenden Sechsecke 8 bilden, wie Fig. 3a zeigt, eine Kette aus Sechsecken mit jeweils paarweise parallel zueinander verlaufenden Kanten. Ein Paar der Kanten verläuft im Wesentlichen parallel zu den von den Quernuten 2 begrenzten Blockkanten. Die diese Seitenkanten bildenden Einschnitte 10 der Sechsecke 8 sind umso länger, je näher sie beim Laufstreifenrand liegen. Die Sechsecke 8 werden daher in Querrichtung bzw. in Richtung der Orientierung der Quernuten 2 zum Laufstreifenrand mehr und mehr gestreckt. Das Sechseck 8, welches der Umfangsnut 1 am Nächsten liegt, weist die kürzesten Einschnitte 10, das Secheck 8, welches dem Laufstreifenrand am Nächsten liegt, weist die längsten Einschnitte 10 auf. Von Sechseck 8 zu Sechseck 8 beträgt die Längenänderung zumindest 20%, insbesondere bis zu 50%.

Der in Fig. 4 gezeigte Profilblock ist ein Block 7 aus dem mittleren Bereich des Laufstreifens und der Umfangsnut 1 benachbart. Im mittleren Bereich des Blockes 7 ist eine Kette aus zwei Sechsecken 8 und zwei Siebenecken 8"' gebildet. Randseitig sind hauptsächlich Fünfecke 8' gebildet, die zumindest im Wesentlichen übereinstimmend groß sind. Dadurch, dass der Block 7 in Umfangsrichtung vorerst breiter und dann wieder schmäler wird, überwiegen im mittleren Bereich des Profilblockes 7 vergleichsweise große Grundelemente, Sechsecke 8 und Siebenecke 8"'. Diese weisen zumindest im Wesentlichen in Profilquerrichtung und parallel zueinander verlaufende Einschnitte 11 auf, deren Länge in Richtung Profilblockmitte zunimmt und von dort aus wieder abnimmt. Die Längenänderung beträgt von Einschnitt 11 zu Einschnitt 11 zwischen 10% und 50%.

Fig. 5 zeigt eine Draufsicht auf einen zentralen Profilblock 6, welcher etwa parallelogrammförmig ist, wobei seine Breite durch den Verlauf der Diagonalrillen 4 mit zunehmender Entfernung von der Äquatorlinie etwas größer wird. Das Einschnittnetz im Profilblock 6 weist entlang der längeren Profilblockkanten Fünfecke 8' und Vierecke 8" auf, wobei zumindest die Fünfecke 8' im Wesentlichen übereinstimmend groß sind. Im mittleren Bereich des Profilblockes 6 sind zwei Sechsecke 8 und ein Siebeneck 8"' vorgesehen. Die beiden Sechsecke 8 weisen jeweils paarweise parallel verlaufende Kanten auf. Die etwa quer zur Längserstreckung des Blockes 6 verlaufenden Einschnitte 12 sind die längsten innerhalb der Sechsecke 8 und werden, je mehr sie im Bereich der Profilblockmitte liegen, umso länger. Die Längenänderungen betragen, ausgehend vom kürzesten Einschnitt 12, von Einschnitt 12 zu Einschnitt 12 zwischen 10% und 20%.

Bei der in Fig. 2 gezeigten Ausführungsvariante eines Laufstreifens sind ebenfalls zwei breite, in Umfangsrichtung umlaufende Umfangsnuten 1' vorgesehen, von welchen in Richtung zu den Laufstreifenrändern Quernuten 2' abzweigen, sodass im Wesentlichen parallelogrammförmige Schulterblöcke 3' gebildet werden. Im Laufstreifenmittelbereich verlaufen auch bei dieser Ausführungsform Diagonalrillen 4', welche ausgehend von den beiden breiten Umfangsnuten 1' in Richtung Äquatorlinie A-A pfeilartig bzw. V-förmig zusammen laufen. Auch bei dieser Ausführungsform sind die von der einen breiten Umfangsnut 1' ausgehenden Diagonalrillen 4' gegenüber jenen, die von der zweiten breiten Umfangsnut 1' ausgehen, in Umfangsrichtung versetzt. Im Laufstreifenmittelbereich gehen die Diagonalrillen 4' über Knickstellen in schmale Verbindungsnuten 5' über, welche jeweils in eine von der anderen Umfangsnut 1' kommende Diagonalrille 4' einmünden. Zwischen den in Umfangsrichtung benachbarten Diagonalrillen 4' werden auf diese Weise zwei Reihen länglicher Blöcke 9 gebildet. Auch bei dieser Ausführungsform sind die Blöcke 3', 9 jeweils von einem Einschnittnetz überzogen.

Wie schon bei der Ausführungsform gemäß Fig. 1 sind in jedem Einschnittnetz im mittleren Bereich Sechsecke 8 gebildet, zu den Kanten der Blöcke 3', 9 besteht das Netz vorrangig aus Fünfecken 8' oder Vierecken 8". Vereinzelt liegen an Eckbereichen der Blöcke 9, bedingt durch die Blockform, auch Siebenecke 8"' vor.

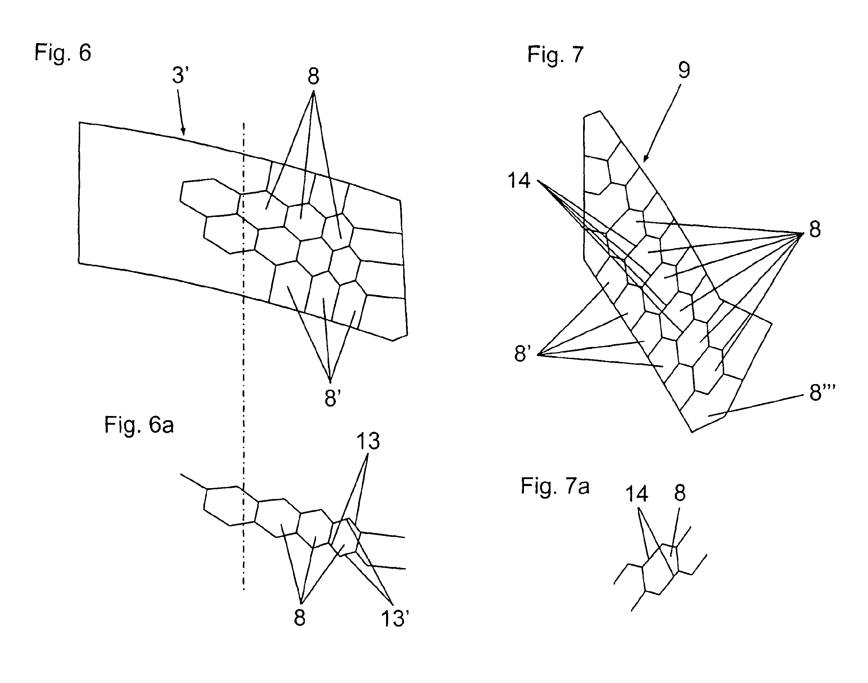

Fig. 6 und 6a zeigen eine Draufsicht auf einen Schulterblock 3', dessen Einschnittnetz mit zwei Ketten von Sechsecken 8 im mittleren Bereich versehen ist. In den Schulterblöcken 3' sind durch das Einschnittnetz im Bereich der Blockkanten Fünfecke 8' gebildet. Innerhalb der Aufstandsbreite des Reifens bestehen die Ketten jeweils aus drei Sechsecken 8. Die beiden Ketten von Sechsecken 8 verlaufen dabei im Wesentlichen parallel zu den Quernuten 2'. Die Sechsecke 8 weisen paarweise einander gegenüberliegende Kanten auf, die im Wesentlichen in Richtung der Quernuten 2' verlaufen. Die beiden Paare von Einschnitten 13, 13', welche diese Kanten bilden, sind derart ausgeführt, dass sie umso länger sind je näher sie beim Laufstreifenrand liegen. Dies ergibt in Richtung zu den Laufstreifenrändern mehr und mehr gestreckte Sechsecke 8. Die Zunahme der Länge der Paare von Einschnitten 13, 13' beträgt zwischen benachbarten Sechsecken 8 zwischen 20% und 50%. Durch die Streckung verändert sich auch der Winkel zwischen den betrachteten Paaren von Einschnitten 13, 13' der Sechsecke 8. Bei dem am weitesten innen gelegenen Sechseck 8, welches ein zumindest im Wesentlichen regelmäßiges Sechseck ist, beträgt der Winkel etwa 60°. Der Winkel nimmt von Sechseck 8 zu Sechseck 8 um 25° bis 75°, insbesondere um 35° bis 65°, zu.

Fig. 7 und 7a zeigen die Ausführung des Einschnittnetzes in einem Block 9 aus dem Mittelbereich des Laufstreifens der Fig. 2. Der langgestreckte Block 9 weist ein Einschnittnetz auf, welches im mittleren Bereich entlang der Längserstreckung des Blockes 9 aus einer Kette von Sechsecken 8 besteht, an welche zu den Blockkanten hauptsächlich Fünfecke 8' anschließen. Bedingt durch die Blockform sind an den Eckbereichen unregelmäßige Sechs- oder Siebenecken 8, 8"' gebildet. In der Kette von Sechsecken 8 im Mittelbereich sind jeweils pro Sechseck 8 zwei der parallel zueinander verlaufenden Kanten im Wesentlichen quer zur Haupterstreckung des Blockes 9 orientiert. Die diese Kanten bildenden Einschnitte 14 sind jene, welche, ausgehend von dem der Äquatorlinie A-A am nächsten liegenden Sechseck 8, in Richtung zum anderen Endbereich des Blockes 9 schrittweise länger werden. Für benachbarte Einschnitte 14 betrachtet beträgt die Zunahme jeweils zwischen 10% und 20% des vorhergehenden Einschnittes 14.

Neben den in den Figuren gezeigten Blöcken können, was das Einschnittnetz oder die sonstige Ausgestaltung der Blöcke betrifft, abweichend ausgeführte Profilblöcke vorgesehen sein. Insbesondere können in einem Laufstreifen Profilblöcke vorhanden sein, die nicht erfindungsgemäß ausgeführt sind. Einschnitte, insbesondere zu erfindungsgemäßen Einschnittnetzen gehörende Einschnitte, werden bevorzugt derart in Profilblöcken angeordnet, dass Einschnittabschnitte, die bis zu den Blockkanten reichen, rechtwinkelig oder fast rechtwinkelig zu den Blockkanten verlaufen. Neben Sechsecken können auch andere n-Ecken Ketten gemäß der Erfindung bilden.

Die Erfindung ist auf die dargestellten Ausführungsbeispiele nicht eingeschränkt. So sind insbesondere die dargestellten Laufstreifen und die Profilstrukturen lediglich Ausführungen einer Vielzahl von Ausgestaltungen, die im Rahmen der Erfindung liegen können.

## Patentansprüche

1. Fahrzeugluftreifen, insbesondere für den Einsatz unter winterlichen Fahrbedingungen, mit einem Laufstreifen, welcher durch Nuten, Rillen und dergleichen gebildete Profilpositive aufweist, wobei Profilpositive vorgesehen sind, welche mit einem Netz aus Einschnitten versehen bzw. überzogen sind, welches sich, gegebenenfalls einschließlich etwaiger Profilpositivkanten, aus n-Ecken mit n ≥ 3 zusammensetzt, wobei innerhalb der Profilpositive zumindest eine Kette aus zumindest zwei n-Ecken, insbesondere aus Sechsecken, gebildet ist, welche paarweise zueinander zumindest im Wesentlichen parallel verlaufende Einschnitte aufweisen und wobei jeweils ein Einschnitt zu zwei aneinandergereihten n-Ecken gehört, und wobei
Profilpositive (6) vorgesehen sind, in welchen sich die zumindest eine Kette aus n-Ecken in oder im Wesentlichen in Umfangsrichtung erstreckt, **dadurch gekennzeichnet, dass** die Länge von parallel zueinander und zumindest im Wesentlichen quer zur Erstreckung der Kette verlaufenden Einschnitten (11, 12, 14) in der in oder im Wesentlichen in Umfangsrichtung verlaufenden Kette schrittweise erhöht ist.

2. Fahrzeugluftreifen nach Anspruch 1, **dadurch gekennzeichnet, dass** die Länge der Einschnitte (11, 12, 14) in zumindest zwei Schritten erhöht ist.

3. Fahrzeugluftreifen nach Anspruch 1 oder 2, **dadurch gekennzeichnet, dass** die Länge von Paaren von Einschnitten (10,13, 13') in den n-Ecken der Kette schrittweise erhöht ist.

4. Fahrzeugluftreifen nach Anspruch 1 oder 2, **dadurch gekennzeichnet, dass** die Länge aufeinander folgender Einschnitte (11, 12, 14) in n-Ecken der Kette von Einschnitt zu Einschnitt schrittweise erhöht ist.

5. Fahrzeugluftreifen nach einem der Ansprüche 1 bis 4, **dadurch gekennzeichnet, dass** die Kette aus Sechsecken (8) oder aus einer Kombination aus Sechs- und Siebenecken (8, 8"') besteht.

6. Fahrzeugluftreifen nach einem der Ansprüche 1 bis 5, **dadurch gekennzeichnet, dass** die Profilpositive Blöcke (6) im mittleren Bereich des Laufstreifens sind:

7. Fahrzeugluftreifen nach einem der Ansprüche 1 bis 6, **dadurch gekennzeichnet, dass** die Längenänderung der Einschnitte (12, 14) in einer Kette von n-Ecken (8, 8"') erfolgt, welche unter einem Winkel von höchstens 45° zur Umfangsrichtung verläuft.

8. Fahrzeugluftreifen nach einem der Ansprüche 1 bis 7, **dadurch gekennzeichnet, dass** die Längenänderung von Einschnitt (11, 12, 14) zu Einschnitt oder von Einschnittpaar (13, 13') zu Einschnittpaar zwischen 10% und 50% beträgt.

## Claims

1. Pneumatic vehicle tyre, in particular for use in winter driving conditions, with a tread rubber, which has positive profiles formed by grooves, channels and the like, positive profiles that are provided or covered with a network of incisions made up of polygons with n sides being provided, where n ≥ 3, possibly including any edges of the positive profile, there being formed within the positive profile at least one series of at least two polygons, in particular hexagons, which have incisions running in pairs at least substantially parallel to one another and an incision respectively belonging to two polygons arranged in series, and positive profiles (6) in which the at least one series of polygons extends in or substantially in the circumferential direction being provided; **characterized in that** the length of incisions (11, 12, 14) running parallel to one another and at least substantially transversely to the extent of the series is increased step by step in the series running in or substantially in the circumferential direction.

2. Pneumatic vehicle tyre according to Claim 1, **characterized in that** the length of the incisions (11, 12, 14) is increased in at least two steps.

3. Pneumatic vehicle tyre according to Claim 1 or 2, **characterized in that** the length of pairs of incisions (10, 13, 13') in the polygons of the series is increased step by step.

4. Pneumatic vehicle tyre according to Claim 1 or 2, **characterized in that** the length of successive incisions (11, 12, 14) in polygons of the series is increased step by step from incision to incision.

5. Pneumatic vehicle tyre according to one of Claims 1 to 4, **characterized in that** the series comprises hexagons (8) or a combination of hexagons and heptagons (8, 8''').

6. Pneumatic vehicle tyre according to one of Claims 1 to 5, **characterized in that** the positive profiles are blocks (6) in the central region of the tread rubber.

7. Pneumatic vehicle tyre according to one of Claims 1 to 6, **characterized in that** the change in length of the incisions (12, 14) takes place in a series of polygons (8, 8''') which runs at an angle of at most 45° to the circumferential direction.

8. Pneumatic vehicle tyre according to one of Claims 1 to 7, **characterized in that** the change in length from incision (11, 12, 14) to incision or from pair of incisions (13, 13') to pair of incisions is between 10% and 50%.

## Revendications

1. Pneumatique pour véhicule, notamment pour l'utilisation dans des conditions de conduite hivernales, comprenant une bande de roulement, qui présente des parties profilées positives formées par des rainures, des gorges et similaires, des parties profilées positives étant prévues, lesquelles sont pourvues ou couvertes d'un réseau d'entailles, qui se compose de polygones à n côtés avec n ≥ 3, éventuellement en incluant des arêtes de parties profilées positives éventuelles, au moins une chaîne d'au moins deux polygones à n côtés, notamment d'hexagones, étant formée à l'intérieur des parties profilées positives, ces chaînes présentant par paires l'une par rapport à l'autre des entailles s'étendant au moins essentiellement parallèlement et une entaille respective appartenant à deux polygones à n côtés successifs, et des parties profilées positives (6) étant prévues, dans lesquelles l'au moins une chaîne constituée de polygones à n côtés s'étend dans ou substantiellement dans la direction périphérique, **caractérisé en ce que** la longueur d'entailles (11, 12, 14) s'étendant parallèlement les unes aux autres et au moins essentiellement transversalement à l'étendue de la chaîne est accrue par incrément dans la chaîne s'étendant dans ou substantiellement dans la direction périphérique.

2. Pneumatique pour véhicule selon la revendication 1, **caractérisé en ce que** la longueur des entailles (11, 12, 14) est accrue en au moins deux incréments.

3. Pneumatique pour véhicule selon la revendication 1 ou 2, **caractérisé en ce que** la longueur de paires d'entailles (10, 13, 13') est accrue par incréments dans les polygones à n côtés de la chaîne.

4. Pneumatique pour véhicule selon la revendication 1 ou 2, **caractérisé en ce que** la longueur d'entailles successives (11, 12, 14) est accrue par incréments dans les polygones à n côtés de la chaîne d'une entaille à l'autre.

5. Pneumatique pour véhicule selon l'une quelconque des revendications 1 à 4, **caractérisé en ce que** la chaîne se compose d'hexagones (8) ou d'une combinaison d'hexagones et d'heptagones (8, 8"').

6. Pneumatique pour véhicule selon l'une quelconque des revendications 1 à 5, **caractérisé en ce que** les parties profilées positives sont des blocs (6) dans la partie centrale de la bande de roulement.

7. Pneumatique pour véhicule selon l'une quelconque des revendications 1 à 6, **caractérisé en ce que** la variation de longueur des entailles (12, 14) a lieu dans une chaîne de polygones à n côtés (8, 8'''), laquelle s'étend suivant un angle de 45° maximum par rapport à la direction périphérique.

8. Pneumatique pour véhicule selon l'une quelconque des revendications 1 à 7, **caractérisé en ce que** la variation de longueur d'une entaille (11, 12, 14) à l'autre ou d'une paire d'entailles (13, 13') à l'autre est comprise entre 10% et 50%.
